# EUROPEAN PATENT SPECIFICATION

(11) **EP 0 964 575 B1**
(45) Date of publication and mention of the grant of the patent: **06.10.2010**
(21) Application number: 99110624.6
(22) Date of filing: 02.06.1999
(51) Int. Cl.: H04N 5/445

(54) **Method for navigating in an electronic broadcast channel periodical**
Verfahren zum Navigieren in einer elektronischen Zeitschrift mit Rundfunkkanälen
Procédé pour naviger dans un magazine électronique de canaux de radiodiffusion

(30) Priority: 13.06.1998 DE 19826501
(43) Date of publication of application: 15.12.1999
(73) Proprietor: Thomson Licensing, 92130 Issy-les-Moulineaux (FR)
(72) Inventor: Storz, Achim, 78098 Triberg (DE)
(74) Representative: Schäferjohann, Volker

(56) References cited:
- WO-A-96/34491
- WO-A-97/13368
- WO-A-97/18670
- WO-A-97/34414
- WO-A1-99/30491

## Description

The invention relates to a method for navigating in an electronic broadcast channel periodical in which the different TV programmes of the various TV channel providers are listed.

### Prior Art

The invention is based on a method for navigating in an electronic broadcast channel periodical of the generic concept of the independent Claim 1. In the conventional teletext system, lists of programmes of the received TV channel are transmitted on specific text pages. The times when the respective programmes begin are given on said pages.

The way of moving forwards and backwards in these lists is however dependent on the predefined division of the teletext into teletext charts. It is therefore necessary to switch in each case to the next video text chart. This can either be done by entering the corresponding page number or by pressing a special key. In addition, the system operates in some cases with subordinate pages so that there is actually no possibility of moving to the next page but instead the user has no option but to wait until the next subordinate page is inserted. If the user wishes to change conveniently from the list of one broadcast channel provider to the list of the next broadcast channel provider in the manner of printed broadcast channel periodicals, with this system virtually the only possibility is to tune the TV set to the broadcaster of interest and to call the video text again. Of course, this requires a plurality of entries. In addition, a large amount of time is required because the video text charts are transmitted cyclically and a certain time passes until the desired page is transmitted and can be viewed.

More recent developments provide an electronic broadcast channel periodical. This is then intended to contain as far as possible the programmes of all the broadcast channel providers which can be received.

WO 97/13368 discloses a system and method for providing television schedule information. A list is displayed on screen with two axis. In one direction different program providers are displayed and in the other direction the program contributions per provider are listed by time.

WO 96/34491 describes an electronic television program guide schedule system and method with remote product ordering. A remote controller with navigation keys up, down, left and right is also included with which it is possible to navigate in the TV guide.

WO 97/18670 shows an electronic guide with enhanced presentation.

### Invention

The object of the invention is to specify a method for the electronic broadcast channel periodical which is to be newly developed, with which method it is possible to navigate in the electronic broadcast channel periodical as conveniently as possible so that the desired points can easily be found.

The object is achieved by means of the features of the independent Claim 1.

According to the invention, the cursor control keys (left-right, up-down), which are already known today from a number of remote control processors, are used for navigating in the electronic broadcast channel periodical. When the up and down keys are activated, the displayed list of the programmes of a selected broadcast channel provider are changed in such a way that it becomes possible to see the chronologically next or preceding programme. In each case the chronologically next or preceding programme is highlighted in its representation. When the last or first entry in the list is reached, and the up key or down key is activated again, the chronologically next or preceding page of the programme list is displayed, wherein the chronologically next or preceding programme is highlighted. The user is thus always informed of which programme is ready for a selection.

The measures specified in the dependent claims permit further advantageous developments and improvements of the method disclosed in Claim 1. Another embodiment of the invention also consists in the fact that when the left and right keys are activated, the display is changed in such a way that a list of programmes of another broadcast channel provider is displayed. The left and right cursor keys can therefore be used to navigate easily in the lists of the programmes of the various broadcast channel providers. The invention thus has the advantage that the user can easily move backwards and forwards between the pages, as it were, in the same way as in a printed broadcast channel periodical, in order to obtain a quick overview of the broadcast programmes.

According to Claim 3, one embodiment may also be such that the functions of the up, down or left, right keys are interchanged. In this case, the up and down keys are used to move in the lists of the programmes of the various broadcast channel providers, and the left and right keys are used to move in a list of a broadcast channel provider.

During the navigation operation to find the correct list of programmes, the embodiment is most simply effected, in accordance with Claim 4, in such a way that when the corresponding navigation key is activated once, the list of programmes of that broadcast channel provider which is located at the broadcast channel memory location next to the broadcast channel memory location of the broadcast channel provider whose list has previously been presented is displayed. The broadcast channel memory location is therefore increased or decreased by one whenever there is an activation.

The measure according to Claim 5 makes it easier to find the programmes of interest when changing to the programmes of a different broadcast channel provider. According to Claim 6, a programme can then be selected by actuating a selection key (OK key), as a result of which additional information on the selected programme is then displayed or a list of possible processing options is displayed.

Such processing options can consist, according to Claim 7, in, for example, a possibility of programming a video recorder to record the selected programme and in a possibility of programming the timer of the TV set to switch on the TV set at the correct time when the selected programme is broadcast.

### Drawings

Exemplary embodiments of the invention are represented in the drawings and are explained in more detail in the following description. In said drawing:
- Fig. 1: shows the representation of a TV set with remote control;
- Fig. 2: shows the arrangement of the cursor control keys on the remote control;
- Fig. 3: shows a first example of possible navigation operations in an electronic broadcast channel periodical, and
- Fig. 4: shows a second example of possible navigation operations in an electronic broadcast channel periodical.

### Exemplary Embodiments of the Invention

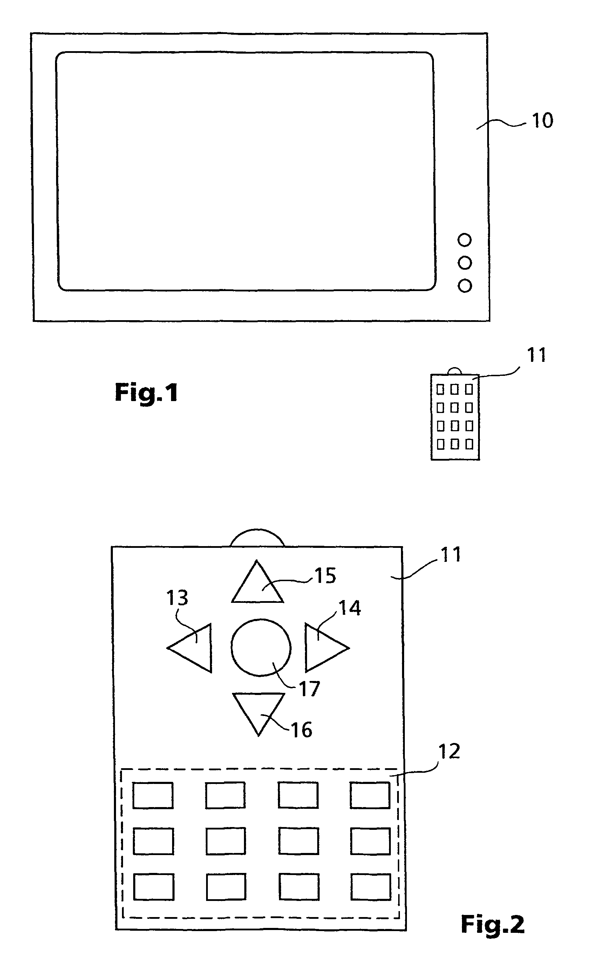

The invention is intended for use in particular in conventional TV sets. A conventional TV set with screen is represented in Fig. 1. The associated remote control is designated therein with the reference numeral 11.

In Fig. 2, the reference numeral 12 designates the conventional keypad of the remote control. The numerical keys and also a number of special keys are contained in it. The reference numerals 13 -16 designate the cursor control keys of the remote control. The reference numeral 13 designates the left key, the reference numeral 14 designates the right key, the reference numeral 15 designates the up key and the reference numeral 16 designates the down key. The selection key 17, frequently also referred to as OK key, is also provided in the centre of the cursor control keys. Of course, these keys do not necessarily have to be provided on the remote control, they can also be provided on the housing of the TV set 10 or, for example, integrated on an entry keypad which can be connected to the TV set.

An electronic broadcast channel periodical can be transmitted in a separate video channel, in addition to a number of video channels, or integrated in the individual video channels. Another possibility consists in storing the electronic broadcast channel periodical on a storage medium. The storage medium is then delivered like a printed broadcast channel periodical and made available by playing back in an appropriate playback device. A further possibility also consists in transmitting the data of the broadcast channel periodical on the Internet or by electronic mail.

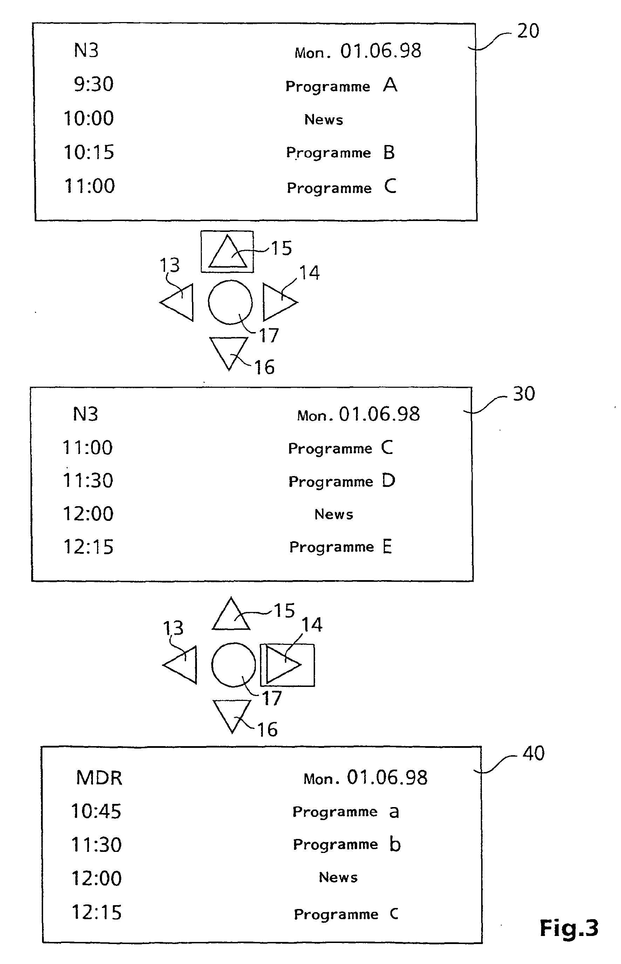

A first method according to the invention will now be explained with reference to Fig. 3. In Fig. 3, the reference numeral 20 designates the representation of a list of programmes of a broadcast channel provider. A list for the broadcasting company Nord 3, dated Monday 1.6.1998 has been selected as an example. In this simplified representation, just four programmes are listed. A programme A is broadcast at 9.30, the news at 10.00, a programme B at 10.15 and a programme C at 11.00 h. Of course, even more information may be contained in the list in an electronic broadcast channel periodical.

The cursor control keys of the remote control are represented underneath the programme list 20 which is represented. The outlining of the up key 15 indicates that this key is pressed in order to navigate in the electronic broadcast channel periodical. Pressing this key causes the TV set 10 to represent the next page of the programme list. Here, the execution is selected in such a way that the programme entry which is displayed in the last position and which relates to programme C is moved to the first position of the new excerpt 30 from the list of programme entries. This serves the purpose of easier orientation within the list.

The newly output list has been expanded in the direction of later broadcasts. It is shown that a programme D begins at 11.30, the news is broadcast again at 12.00 h and a programme E begins at 12.15. Below the second programme list represented there is an indication that the right-hand cursor control key is subsequently activated by the operator. In response, the TV set 10 is made to output the approximately simultaneous list of the next broadcast channel provider. In this case, as an example, a broadcast channel list of the MDR broadcasting stations is also given for the same date. This shows that at 10.45 a programme A begins, a programme B at 11.30, the news at 12.00 and a programme C at 12.15. After the right-hand cursor control key 14 has been activated once, the TV set selects the programme list of that broadcast channel provider which is stored at the next broadcast channel memory location. In this example, the tuning data for the broadcast channel provider Nord 3 are stored at broadcast channel memory location 10 and the tuning data for the broadcast channel provider MDR at broadcast channel location 11, for example. When the left-hand cursor key is activated after the broadcast channel list 40 of the broadcasting station MDR has been output, the system therefore jumps back again to the broadcast channel list of the broadcasting station Nord 3. When the corresponding cursor control keys are activated repeatedly in succession, the system would then correspondingly jump forward by the same number of memory locations in each case, and select the corresponding broadcast channel list.

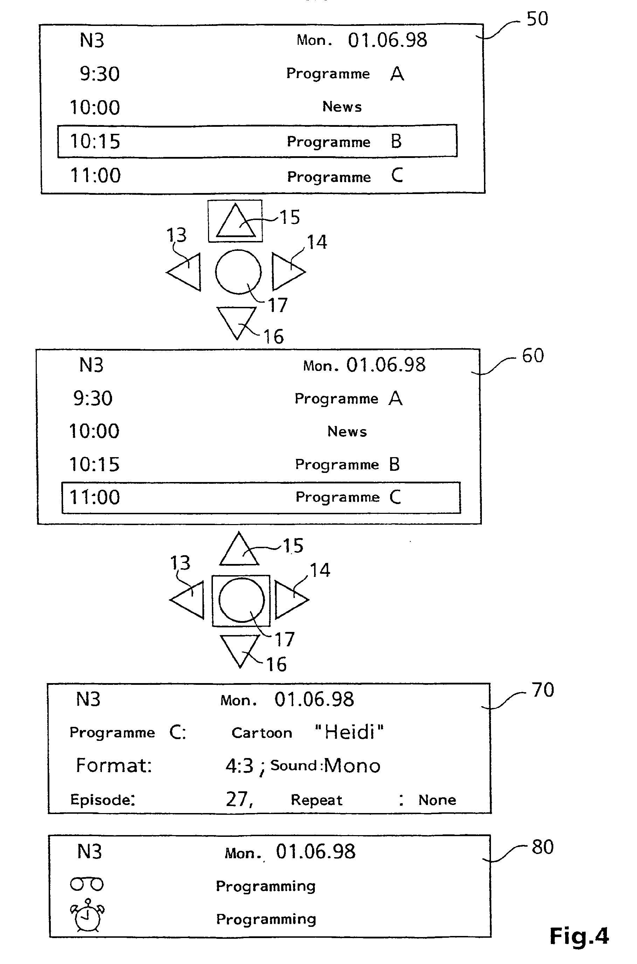

Fig. 4 represents a second exemplary embodiment of the invention. Firstly, Fig. 4 represents again the same broadcast channel list as was also shown at the start of Fig. 3. However, here the programme entry relating to programme B, which starts at 10.15, is outlined. This indicates that a mark with which a specific programme entry is highlighted is provided here on the image. This has the purpose of providing orientation in the broadcast channel list. After the up key 15 has been activated, the image is not moved on by an entire page in this exemplary embodiment but rather the mark is only moved to the next programme entry. This is the programme entry relating to the programme B, see display image 60. When the up key 15 is activated further, the screen would then be moved forward again by an entire page, and the next programme entry would be highlighted.

Below the display image 60 it is indicated that the selection key 17 is activated next. Pressing this key triggers the function in which an insertion is made in accordance with the reference numeral 70 on the screen of the TV set. In this insertion, a plurality of items of information on the programme C which has previously been selected are given. For example, it is specified here that the broadcast is a cartoon called Heidi, that the broadcast takes place in 4:3 format and the mono operating mode has been selected for sound transmission and that it is the 27th episode of the series and that, in this case, it is not planned to repeat this programme. The information which is specified here is of an exemplary nature. Of course, completely different information relating to the programme C can also be displayed.

A different possibility is given in the display screen 80, which possibility can be triggered by pressing the selection key 17. Specifically, a list of processing options is displayed in this exemplary embodiment. In the case represented, two different processing options are shown, specifically firstly the option of programming the necessary data for recording the selected programme on a video recorder and secondly the programming of the timer of the TV set to switch on the TV set at the correct time, for example for an alarm function. These examples are not meant to be conclusive either, it is, of course, also possible to insert further options or other options. As is shown in Fig. 4, one of the options is outlined, i.e. highlighted, again. The desired option can then be selected using the cursor control keys and the selected option is also then executed by actuating the selection key 17.

The exemplary embodiments which are presented are implemented in a TV set by means of software. The keys which are pressed trigger IR commands which are evaluated in the receiver of the TV set, and bring about function calls of a programme in which it is then programmed which data have to be selected from the stored database for the electronic broadcast channel periodical and have to be displayed. This can be implemented easily in a conventional way using conventional programming languages. The respective person skilled in the art of computers is familiar with such program techniques.

## Claims

1. Method for navigating in an electronic broadcast channel periodical, the electronic broadcast channel periodical being transmitted, in addition to a number of video channels, in a separate video channel or integrated in a video channel or being stored on a storage medium and being made available by delivering it and playing it back in a playback device or is made available by transmission in a separate channel, in particular a telephone channel, cursor control keys (13, 14, 15, 16) of an input means (11) being used to control the display, **characterized in that** when the up key (15) or down key (16) is activated, the display is changed in such a way that the list of represented programmes of a selected broadcast channel provider is changed in such a way that the chronologically next or preceding programme is highlighted, and when the last or first entry in the list is reached and the up key (15) or down key (16) is respectively activated again, the chronologically next or preceding entire page of the list of programmes is displayed, with said chronologically next or preceding programme being highlighted.

2. Method according to claim 1, wherein when the left key (13) or right key (14) is activated, the display is changed in such a way that a list of programmes of a different broadcast channel provider is displayed (40).

3. Method according to Claim 1 or 2, the functions of the up key (15), down key (16) and left key (13), right key (14) being interchanged.

4. Method according to one of the Claims 1 to 3, a list of programmes of the different broadcast channel provider which is located at a broadcast channel memory location next to the broadcast channel memory location of the broadcast channel provider whose list of programmes has previously been presented being displayed.

5. Method according to one of the preceding claims, the list of programmes of the other broadcast channel provider being selected in such a way that programmes which have starting times which correspond as closely as possible to the starting times of the programmes of the previously represented list are displayed in the represented list.

6. Method according to one of the Claims 1 to 5, in which, furthermore, a selection key (17) is used to control the display, additional information (70) or a list of possible processing options (80) relating to the highlighted programme being displayed when said key is activated.

7. Method according to Claim 6, the list of possible commands containing at least the commands for programming a video recorder to record the selected programme and/or programming the timer of the TV set to switch on the TV set (10) at the correct time.

## Patentansprüche

1. Verfahren zum Navigieren in einer elektronischen Zeitschrift mit Rundfunkkanälen, die zusätzlich zu einer Anzahl von Videokanälen in einem getrennten Videokanal übertragen oder in einen Videokanal integriert wird oder in einem Speichermedium gespeichert und durch Lieferung und Abspielen in einer Wiedergabevorrichtung verfügbar gemacht wird oder durch Übertragung in einem getrennten Kanal, insbesondere einem Telefonkanal, verfügbar gemacht wird, wobei Cursor-Steuertasten (13, 14, 15, 16) eines Eingabemittels (11) zur Steuerung der Anzeige verwendet werden, **dadurch gekennzeichnet, dass** bei Aktivierung der Aufwärtstaste (15) oder der Abwärtstaste (16) die Anzeige so geändert wird, dass die Liste der dargestellten Programme eines ausgewählten Rundfunkkanal-Anbieters derart geändert wird, dass das chronologisch nächste oder vorhergehende Programm hervorgehoben wird, und wenn der letzte oder erste Eintrag in der Liste erreicht wird und die Aufwärtstaste (15) oder die Abwärtstaste (16) jeweils erneut aktiviert wird, die chronologisch nächste oder vorhergehende vollständige Seite der Liste mit Programmen angezeigt wird, wobei das chronologisch nächste oder vorhergehende Programm hervorgehoben wird.

2. Verfahren nach Anspruch 1, bei dem bei Aktivierung der linken Taste (13) oder der rechten Taste (14) die Anzeige so geändert wird, dass eine Liste mit Programmen eines anderen Rundfunkkanal-Anbieters angezeigt wird (14).

3. Verfahren nach Anspruch 1 oder 2, bei dem die Funktionen der Aufwärtstaste (15), der Abwärtstaste (16) und der linken Taste (13), der rechten Taste (14) vertauscht werden.

4. Verfahren nach einem der Ansprüche 1 bis 3, bei dem eine Liste von Programmen der verschiedenen Rundfunkkanal-Anbieter, die sich an einem Rundfunkkanal-Speicherplatz befindet, der dem Rundfunkkanal-Speicherplatz des Rundfunkkanal-Anbieters am nächsten ist, dessen Programmliste zuvor präsentiert worden ist, angezeigt wird.

5. Verfahren nach einem der vorhergehenden Anspruche, bei dem die Liste von Programmen der anderen Rundfunkkanal-Anbieter so ausgewählt wird, dass Programme, die Anfangszeiten haben, die so nahe wie möglich den Anfangszeiten der zuvor dargestellten Liste entsprechen, in der dargestellten Liste angezeigt werden.

6. Verfahren nach einem der Ansprüche 1 bis 5, bei dem ferner eine Auswahltaste (17) verwendet wird, um die Anzeige zu steuern, wobei zusätzliche Informationen (70) oder eine Liste von möglichen Verarbeitungsoptionen (80), die sich auf die hervorgehobenen Programme beziehen, angezeigt werden, wenn die Taste aktiviert wird.

7. Verfahren nach Anspruch 6, bei dem die Liste von möglichen Befehlen wenigstens die Befehle zum Programmieren eines videorecorders enthält, um die ausgewählten Programme aufzuzeichnen und/oder den Timer des Fernsehgerätes so zu programmieren, dass der Fernsehempfänger (10) zur richtigen Zeit einschaltet.

## Revendications

1. Procédé pour naviguer dans un magazine électronique de canaux de radiodiffusion, le magazine électronique de canaux de radiodiffusion étant transmis, en plus d'un certain nombre de canaux vidéo, dans un canal vidéo distinct ou intégré dans un canal vidéo ou stocké sur un support de stockage et mis à disposition en le fournissant et en le lisant dans un dispositif de lecture ou est mis à disposition par une transmission dans un canal distinct, en particulier un canal téléphonique, des touches de commande de curseur (13, 14, 15, 16) d'un moyen d'entrée (11) étant utilisées pour commander l'écran, **caractérisé en ce que** lorsque la touche vers le haut (15) ou la touche vers le bas (16) est activée, l'écran est modifié de telle manière que la liste des programmes représentés d'un fournisseur de canaux de radiodiffusion sélectionné soit modifiée de telle manière que le programme suivant ou précédent chronologiquement soit mis en surbrillance, et lorsque la dernière ou la première entrée de la liste est atteinte et que la touche vers le haut (15) ou la touche vers le bas (16) est respectivement activée de nouveau, la page entière suivante ou précédente chronologiquement de la liste de programmes s'affiche, ledit programme suivant ou précédent chronologiquement étant mis en surbrillance.

2. Procédé selon la revendication 1, où lorsque la touche gauche (13) ou la touche droite (14) est activée, l'écran est modifié de telle manière qu'une liste de programmes d'un fournisseur de canaux de radiodiffusion différent s'affiche (40).

3. Procédé selon la revendication 1 ou 2, les fonctions de la touche vers le haut (15), la touche vers le bas (16) et la touche vers la gauche (13), la touche vers la droite (14) étant interchangées.

4. Procédé selon une des revendications 1 à 3, une liste de programmes du fournisseur de canaux de radiodiffusion différent situé à un emplacement de mémoire de canaux de radiodiffusion à proximité de l'emplacement de mémoire de canaux de radiodiffusion du fournisseur de canaux de radiodiffusion dont la liste de programmes a précédemment été présentée s'affichant.

5. Procédé selon une des revendications précédentes, la liste de programmes de l'autre fournisseur de canaux de radiodiffusion étant sélectionnée de telle manière que des programmes possédant des heures de début qui correspondent le plus possible aux heures de début des programmes de la liste représentée précédemment s'affichent dans la liste représentée.

6. Procédé selon une des revendications 1 à 5, dans lequel, en outre, une touche de sélection (17) est utilisée pour commander l'écran, des informations supplémentaires (70) ou une liste d'options de traitement possibles (80) relatives au programme en surbrillance s'affichant lorsque ladite touche est activée.

7. Procédé selon la revendication 6, la liste de commandes possibles contenant au moins les commandes de programmation d'un enregistreur vidéo pour enregistrer le programme sélectionné et/ou de programmation du minuteur du téléviseur pour mettre le téléviseur (10) sous tension à l'heure correcte.
